# EUROPEAN PATENT APPLICATION

(11) **EP 1 035 608 A2**
(43) Date of publication of application: **13.09.2000**
(21) Application number: 00102653.3
(22) Date of filing: 08.02.2000
(51) Int. Cl.: H01M 8/02, H01M 8/10

(54) **Separator for fuel cell and solid polymer type fuel cell using said separator**

(30) Priority: 09.02.1999 JP 3104099
(71) Applicant: Nisshinbo Industries, Inc., Chuo-ku, Tokyo 103-8650 (JP)
(72) Inventor: Saito, Kazuo, c/o Nisshinbo Industries, Inc., Adachi-ku, Tokyo 123-0843 (JP); Hagiwara, Atsushi, c/o Nisshinbo Industries, Inc., Adachi-ku, Tokyo 123-0843 (JP); Yamamoto, Seiji, c/o Nisshinbo Industries, Inc., Adachi-ku, Tokyo 123-0843 (JP)
(74) Representative: Zinnecker, Armin, Dipl.-Ing.

(57) **Abstract**

A separator for fuel cell, comprising
a conductive core part composed of a metal material or a metal composite material,
a conductive adhesive layer covering the conductive core part, and
a conductive skin part formed on the conductive adhesive layer,
   wherein the conductive core part and the conductive skin part are bonded via the conductive adhesive layer.

The separator for fuel cell alleviates the problems of the prior art, and has sufficient strength and gas non-permeability even when made in a thin sheet.

## Description

### Background of the Invention

### 1. Field of the Invention

The present invention relates to a separator for fuel cell. More particularly, the present invention relates to a separator for fuel cell which has sufficient strength and gas non-permeability even when made in a thin sheet.

### 2. Description of the Prior Art

Fuel cell separators are generally a flat sheet having a plurality of parallel grooves on one or both sides and have a role of (1) transmitting the electricity generated in the gas-diffusing electrode of fuel cell, to outside and also (2) draining the water formed in the grooves during the process of electricity generation, and securing the grooves as passages for reactant gas flowing into the fuel cell.

As fuel cells have become lighter and thinner in recent years, it has become necessary to produce the separators therefor in a thinner sheet. However, the fuel cell separators produced in a thinner sheet have had low strength and high gas permeability.

In order to solve the above problems, there were proposed a fuel cell separator which is a molding made of a carbon powder-phenolic resin mixture,metal sheet between compressive conductive sheets, bonding them under pressure, and, simultaneously therewith, forming gas passages by punching (see U.S.P. No. 5,527,363).

In the fuel cell separator which is a molding made of a carbon powder-phenolic resin mixture, containing a metal mesh or a metal piece in the center, there are the same problems as seen in conventional separators; that is, the metal mesh or the metal piece tends to peel in the molding owing to the external force (e.g. impact or clamping) applied at the time of assembling of fuel cell, resulting in higher conductivity and gas permeability.

In the fuel cell separator obtained by inserting a metal sheet between compressive conductive sheets, bonding them under pressure, and, simultaneously therewith, forming gas passages by punching, the conductive sheet and the metal sheet are bonded simply by pressure and the adhesion strength between them is insufficient; therefore, they may be separated from each other when used in hot water. Moreover, since the adhesion between the conductive sheet and the metal sheet is insufficient, the contact resistance between them is high, and the resulting fuel cell separator has high resistance and shows severe change with time particularly in hot water.

### Summary of the Invention

The present invention intends to alleviate the above-mentioned problems of the prior art and provide a separator for fuel cell which has sufficient strength and gas impermeability even when made in a thin sheet.

According to the present invention, there is provided a separator for fuel cell, comprising
a conductive core part composed of a metal material or a metal composite material,
a conductive adhesive layer covering the conductive core part, and
a conductive skin part formed on the conductive adhesive layer,
   wherein the conductive core part and the conductive skin part are bonded via the conductive adhesive layer.

### Brief Description of the Drawings

Fig. 1 is a sectional view showing an example of the structure of the fuel cell separator of the present invention.
Fig. 2 is a conceptual view showing an example of the process for production of the present fuel cell separator.
Fig. 3 is a conceptual view showing an example of the process for production of the present fuel cell separator.
Fig. 4 is a conceptual view showing an example of the process for production of the present fuel cell separator.

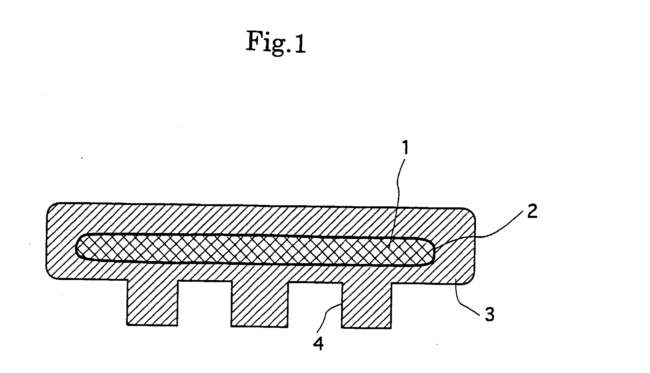

In Fig. 1, numeral 1 refers to a conductive core part; numeral 2 refers to a conductive adhesive layer; numeral 3 refers to a conductive skin part; and numeral 4 refers to a passage for reactant gas.

### Detailed Description of the Invention

The present invention is hereinafter described in detail.

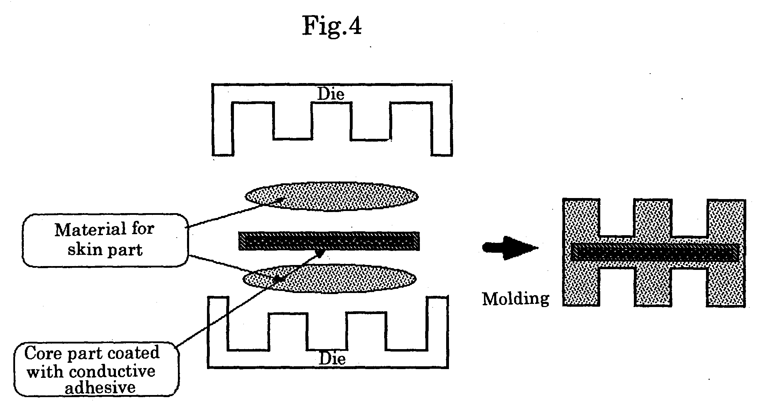

The separator for fuel cell according to the present invention comprises, as shown in, for example, Fig. 1, a conductive core part 1 composed of a metal material or a metal composite material, a conductive adhesive layer 2 covering the conductive core part 1, and a conductive skin part 3 formed on the conductive adhesive layer 2. In Fig. 1, 4 is each passage for reactant gas flowing into fuel cell.

The shape of the present fuel cell separator is not restricted to one shown in Fig. 1 and may be, for example, such that has passages 4 for reactant gas at the upside as well.

The conductive core part 1 is composed of a metal material represented by titanium, aluminum, stainless steel or the like, or a metal composite material obtained by coating a noble metal, a carbon material or the like on the above metal material.

As the shape of the conductive core part 1, there can be mentioned, for example, a sheet-like shape having a thickness of about 5 µm to 3 mm, as shown in Fig. 1; a shape corresponding to fuel cell separator; and a shape partly corresponding to fuel cell separator.

The conductive core part 1 may be subjected to a surface treatment by mechanical grinding such as sandblasting, discharge treatment, lapping, polishing or the like, in order to allow the conductive core part 1 to have higher adhesivity to the conductive skin part 3 described later.

In Fig. 1, the conductive adhesive layer 2 covering the conductive core part 1 is composed of a conductive adhesive. As the conductive adhesive, there can be mentioned, for example, a carbon-containing conductive adhesive comprising a carbon powder acting as a conductive filler and a resin acting as a binder.

The carbon powder acting as a conductive filler in the conductive adhesive has no particular restriction as to the kind as long as it can be used for imparting conductivity. There can be mentioned, for example, natural graphite (e.g. scaly graphite or lumpy graphite), artificial graphite, expanded graphite, acetylene black, carbon black and Ketjen Back. They can be used singly or in combination of two or more kinds.

The resin acting as a binder in the conductive adhesive has no particular restriction as to the kind as long as it can be used for conductivity improvement and also for the strong bonding between the skin part and the core part. There can be mentioned, for example, at least one kind selected from thermosetting resins, thermoplastic resins and rubbers. The resin may be a liquid or an emulsion.

As the thermosetting resin, there can be mentioned, for example, phenolic resin, polycarbodiimide resin, furfuryl alcohol resin, epoxy resin, cellulose, urea resin, melamine resin, unsaturated polyester resin, silicone resin, diallyl phthalate resin, bismaleimidetriazine resin, polyaminobismaleimide resin and aromatic polyimide resin. They can be used singly or in admixture of two or more kinds.

As the thermoplastic resin, there can be mentioned, for example, polyethylene, polystyrene, polypropylene, polymethyl methacrylate, polyethylene terephthalate, polybutylene terephthalate, polyethersulfone, polycarbonate, polyoxamethylene, polyamide, polyimide, polyamideimide, polyvinyl alcohol, polyvinyl chloride, polyphenylsulfone, polyetherether ketone, polysulfone, polyether ketone, polyarylate, polyetherimide, polymethylpentene, fluororesin, polyoxybenzoyl ester resin, liquid crystal polyester resin, aromatic polyester, polyacetal, polyallylsulfone, polybenzimidazole, polyethernitrile, polythioethersulfone and polyphenylene ether. They can be used singly or in admixture of two or more kinds.

As the rubber, there can be mentioned, for example, fluororubber, silicone rubber, butyl rubber, chloroprene rubber, nitrile rubber, nitrile-chloroprene rubber, chlorinated butyl rubber, epichlorohydrin rubber, epichlorohydrinethylene oxide rubber, epichlorohydrin-ethylene oxide-acrylic glycidyl ether terpolymer, urethane rubber, acrylic rubber, ethylene-propylene rubber, styrene rubber, butadiene rubber and natural rubber. They can be used singly or in admixture of two or more kinds.

The conductive adhesive may contain, as necessary, additives such as dispersing agent, thickening agent, stabilizer, antifoaming agent and the like.

In the conductive adhesive, the proportions of the carbon powder and the resin can be, for example, 100 parts by weight (the carbon powder) and 10 to 150 parts by weight (the resin). When the proportion of the resin is smaller than 10 parts by weight, no sufficient adhesive layer is obtained. When the proportion of the resin is larger than 150 parts by weight, no sufficient conductivity is obtained.

The carbon powder and the resin can be simply mixed, whereby the conductive adhesive can be obtained. The application of the conductive adhesive to the conductive core part 1 to form a conductive adhesive layer 2 for covering the conductive core part 1 can be conducted by a known method such as casting, dip coating, spraying, brush coating, screen printing or the like. The thus-applied conductive adhesive may be introduced, in that state, into a step of bonding with the conductive skin part 3 described later, or may be dried and cured in, for example, a drier. The drying temperature employed in this drying step can be, for example, 30 to 200°C.

The thickness of the conductive adhesive layer 2 can be, for example, 0.1 to 200 µm. When the thickness is larger than 200 µm, no sufficient adhesive strength can be obtained.

In the present invention, the conductive skin part 3 has a function of allowing the separator to have a lower contact resistance with a material with which the separator comes in contact, such as film electrode, carbon paper or the like. As the material constituting the conductive skin part 3, there can be mentioned a carbon-containing composite material containing a carbon powder as a conductive filler and a resin as a binder.

In the material constituting the conductive skin part 3, the carbon powder as a conductive filler has no particular restriction as to the kind as long as it can impart conductivity. As the carbon powder, there can be mentioned, as in the above-mentioned conductive adhesive, for example, natural graphite (e.g. scaly graphite or lumpy graphite), artificial graphite, expanded graphite, acetylene black, carbon black and Ketjen Back. They can be used singly or in combination of two or more kinds.

In the material constituting the conductive skin part 3, the resin as a binder has no particular restriction as to the kind as long as it can improve the conductivity and strength of skin part. As the resin, there can be mentioned, as in the conductive adhesive, for example, at least one kind selected from thermosetting resins, thermoplastic resins and rubbers. The resin may be a liquid or an emulsion.

As the thermosetting resin, there can be mentioned, for example, phenolic resin, polycarbodiimide resin, furfuryl alcohol resin, epoxy resin, cellulose, urea resin, melamine resin, unsaturated polyester resin, silicone resin, diallyl phthalate resin, bismaleimidetriazine resin, polyaminobismaleimide resin and aromatic polyimide resin. They can be used singly or in admixture of two or more kinds.

As the thermoplastic resin, there can be mentioned, for example, polyethylene, polystyrene, polypropylene, polymethyl methacrylate, polyethylene terephthalate, polybutylene terephthalate, polyethersulfone, polycarbonate, polyoxamethylene, polyamide, polyimide, polyamideimide, polyvinyl alcohol, polyvinyl chloride, polyphenylsulfone, polyetherether ketone, polysulfone, polyether ketone, polyarylate, polyetherimide, polymethylpentene, fluororesin, polyoxybenzoyl ester resin, liquid crystal polyester resin, aromatic polyester, polyacetal, polyallylsulfone, polybenzimidazole, polyethernitrile, polythioethersulfone and polyphenylene ether. They can be used singly or in admixture of two or more kinds.

As the rubber, there can be mentioned, for example, fluororubber, silicone rubber, butyl rubber, chloroprene rubber, nitrile rubber, nitrile-chloroprene rubber, chlorinated butyl rubber, epichlorohydrin rubber, epichlorohydrin-ethylene oxide rubber, epichlorohydrin-ethylene oxide-acrylic glycidyl ether terpolymer, urethane rubber, acrylic rubber, ethylene-propylene rubber, styrene rubber, butadiene rubber and natural rubber. They can be used singly or in admixture of two or more kinds.

In the material constituting the conductive skin part 3, the proportions of the carbon powder and the resin can be, for example, 100 parts by weight (the carbon powder) and 3 to 35 parts by weight (the resin), When the proportion of the resin is smaller than 3 parts by weight, the conductive skin part 3 is unable to have sufficient strength, and may be collapsed, for example, by the water formed during power generation of fuel cell. When the proportion of the resin is larger than 35 parts by weight, the conductivity required for the conductive skin part 3 cannot be secured.

It is possible to integrate the conductive adhesive layer 2 and the conductive skin part 3 by using the same substance for the conductive adhesive and the material constituting the conductive skin part.

The fuel cell separator of the present invention can be produced by at least three kinds of methods depending upon how the conductive skin part 3 is formed.

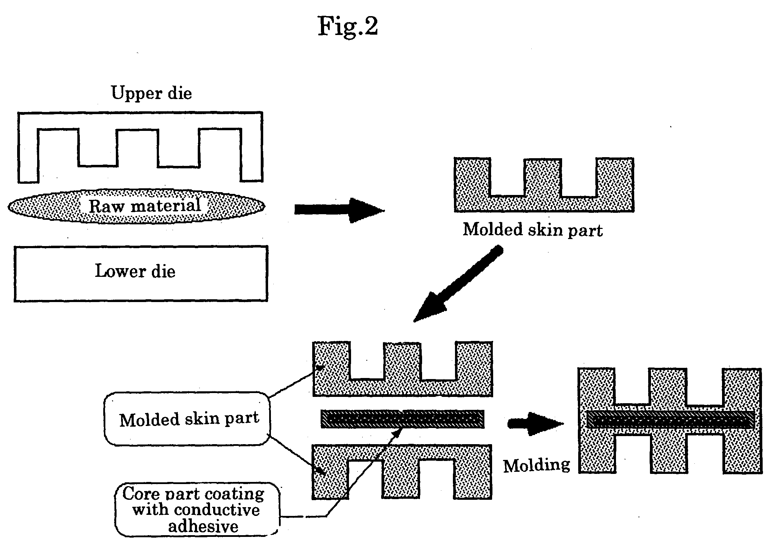

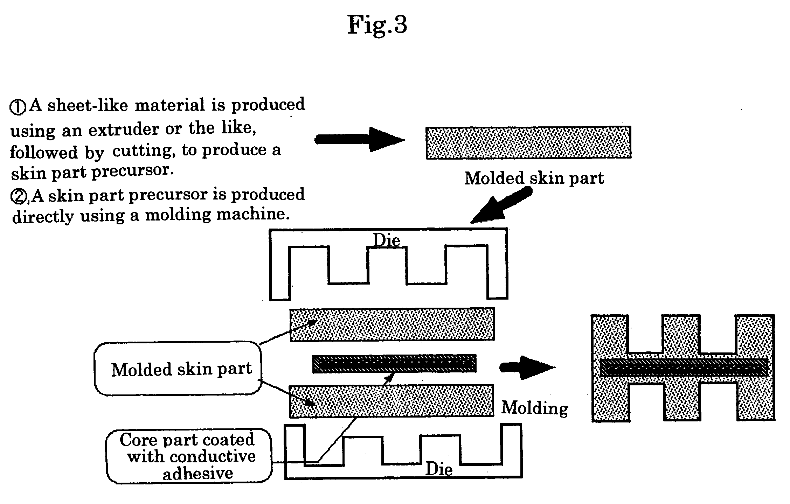

In the first production method, as shown in Fig. 2, a conductive skin part 3 is produced beforehand, and is bonded with a conductive core part 1 using a conductive adhesive. In the second production method, as shown in Fig. 3, a laminate of a conductive core part and a conductive skin part via a conductive adhesive is placed in a die and molded into a separator shape. In the third production method, as shown in Fig. 4, there are placed, in a die, a conductive core part 1 coated with a conductive adhesive and a material for the conductive skin part to be formed on one or both sides of the core part, and then molding is conducted.

In the present invention, as mentioned above, a conductive core part 1 and a conductive skin part 3 are adhered via a conductive adhesive layer 2, to obtain a fuel cell separator. In this step as well, a known method can be used. There can be used, for example, die molding, injection molding, extrusion molding, roll molding or isostatic molding.

The present invention is described in more detail below by way of Examples.

### Examples 1 to 5

There were mixed, in a ball mill, 50 parts by weight of scaly graphite (average particle diameter = 3 µm), 50 parts by weight of acetylene black (average particle diameter = 40 nm) and 32 parts by weight of a phenolic resin, whereby a conductive adhesive was produced. As a core part, there was used a stainless steel sheet (flat sheet made of SUS 316, thickness = 0.1 mm, no groove). The above conductive adhesive was spray-coated on the whole surface of the steel sheet and then dried to form a conductive adhesive layer having a thickness of 30 µm.

As shown in Fig. 2, a raw material mixture for skin part shown in Table 1 was fed into two same dies for separator molding, each consisting of a ribbed half die and a non-ribbed half die, to mold two same conductive skin parts. One of the half dies was removed from each die (the ribbed half die was removed from one die, and the non-ribbed half die was removed from the other die). Between the two remaining half dies (actually between the two conductive skin parts) was placed the above-produced conductive core part covered with the conductive adhesive layer, and pressing was made at 152°C at 120 kg/cm² for 5 minutes to produce a separator of 2 mm in thickness having a conductive core layer in the center.

This separator for fuel cell was measured for resistivity and gas permeability. Further, the separator was fitted to a repeated compression tester used in JIS K 6400 (a test method for soft urethane foam), then subjected to 20 times repeated compression, and observed for the condition after the test. Furthermore, the separator was integrated into a solid polymer type fuel cell; clamping was made at a pressure of 100 kg/cm²; in this state, the fuel cell was allowed to generate electricity for 500 hours and there was measured voltage reduction after 500 hours (initial voltage was taken as 100). After the electricity generation of 500 hours, the fuel cell was dissembled to observe the condition of the separator. The test results are shown in Table 1.

### Examples 6 to 10

A fuel cell separator having a skin part made of a raw material mixture shown in Table 1 was produced in the same manner as in Examples 1 to 5 except that there was used, as a material for core part, an aluminum sheet (a flat sheet of 0.1 mm in thickness having no groove), and evaluated in the same manners as in Examples 1 to 5. The results are shown in Table 1.

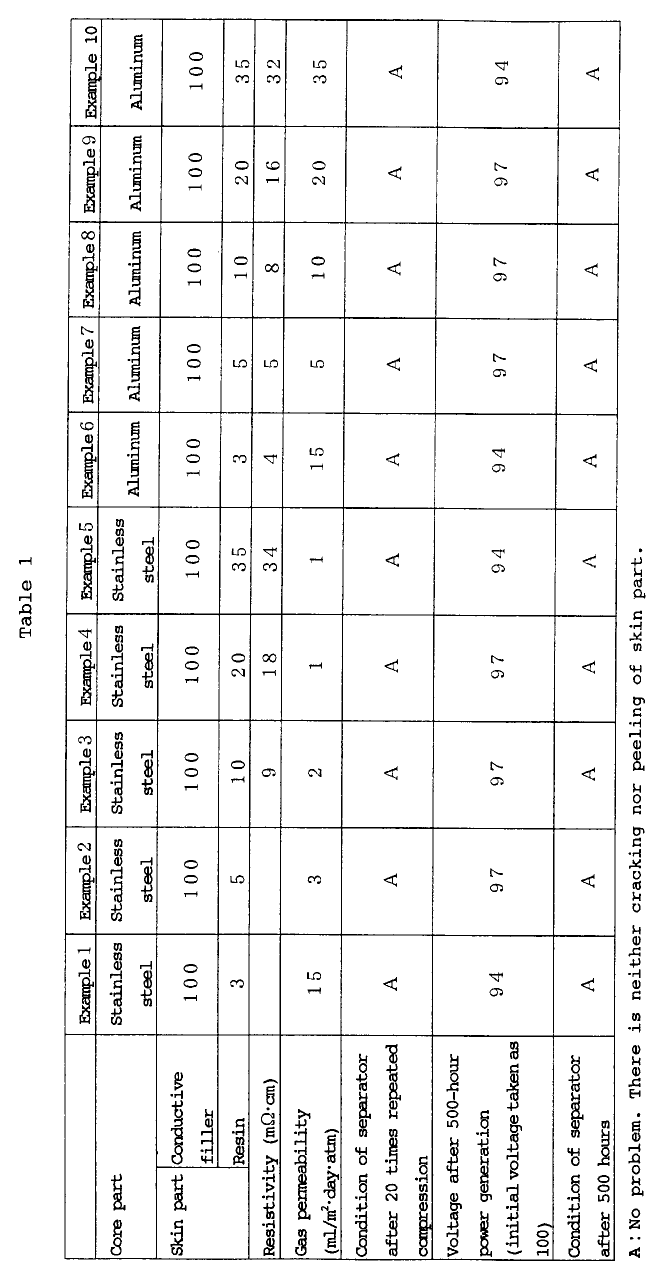

### Examples 11 to 22

A fuel cell separator was produced in the same manner as in Example 4 except that there were changed the kind and composition of the conductive adhesive composing the conductive adhesive layer and the thickness of the conductive adhesive layer, and evaluated in the same manners as in Examples 1 to 5. The results are shown in Table 2.

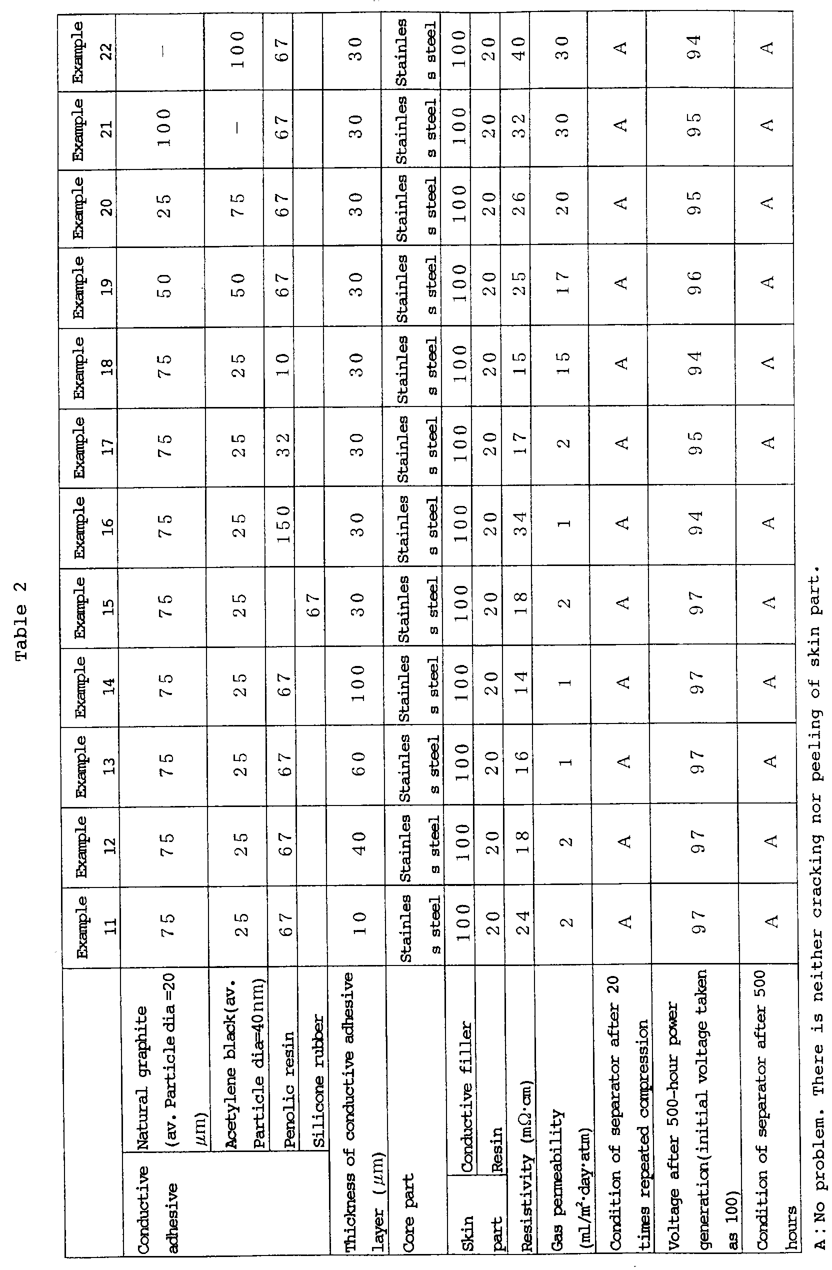

### Example 23

A fuel cell separator was produced in the same manner as in Example 4 except that as shown in Fig. 3, a conductive shin part molded in a flat sheet shape was laminated with a core part using a conductive adhesive to produce a separator precursor, the separator precursor was placed in a ribbed die for separator molding, and bonding between the conductive skin part and the core part was made. The fuel cell separator was evaluated in the same manner as in Examples 1 to 5. The results are shown in Table 3.

### Example 24

As shown in Fig. 4, one half of a material for conductive skin part was placed in a lower ribbed die for separator molding, thereon was placed a core part coated with a conductive adhesive, thereon was placed other half of the material for conductive skin part, and molding was made. The fuel cell separator was evaluated in the same manners in Examples 1 to 5. The results are shown in Table 3.

### Comparative Example 1

Molding was conducted using the same skin part composition as in Example 2, to produce a fuel cell separator having a thickness of 1.0 mm. In the same manner as in Example 1, the separator was measured for resistivity and gas permeability, then subjected to 20 times repeated compression, and observed for the condition after the test. Furthermore, the separator was integrated into a solid polymer type fuel cell and clamping was made; the fuel cell was allowed to generate electricity for 500 hours and there was measured voltage reduction after 500 hours; after the electricity generation of 500 hours, the fuel cell was dissembled to observe the condition of the separator, in the same manner as in Example 1. The results are shown in Table 3.

### Comparative Example 2

A liquid crystal polymer was injected onto the both sides of an aluminum sheet to produce a separator base material. Thereon was vapor-deposited gold to produce a fuel cell separator having a thickness of 1.0 mm. In the same manner as in Example 1, the separator was measured for resistivity and gas permeability, then subjected to 20 times repeated compression, and observed for the condition after the test. Furthermore, the separator was integrated into a solid polymer type fuel cell and clamping was made; the fuel cell was allowed to generate electricity for 500 hours and there was measured voltage reduction after 500 hours; after the electricity generation of 500 hours, the fuel cell was dissembled to observe the condition of the separator, in the same manner as in Example 1. The results are shown in Table 3.

### Comparative Example 3

Molding was conducted in the same manner as in Example 1 except that an aluminum mesh was used in the core part, to produce a fuel cell separator having a thickness of 1.0 mm. In the same manner as in Example 1, the separator was measured for resistivity and gas permeability, then subjected to 20 times repeated compression, and observed for the condition after the test. Furthermore, the separator was integrated into a solid polymer type fuel cell and clamping was made; the fuel cell was allowed to generate electricity for 500 hours and there was measured voltage reduction after 500 hours; after the electricity generation of 500 hours, the fuel cell was dissembled to observe the condition of the separator, in the same manner as in Example 1. The results are shown in Table 3.

### Comparative Example 4

An aluminum sheet having a thickness of 1.0 mm was placed between two expanded graphite sheets and molding was made to produce a fuel cell separator having a thickness of 1.0 mm. In the same manner as in Example 1, the separator was measured for resistivity and gas permeability, then subjected to 20 times repeated compression, and observed for the condition after the test. Furthermore, the separator was integrated into a solid polymer type fuel cell and clamping was made; the fuel cell was allowed to generate electricity for 500 hours and there was measured voltage reduction after 500 hours; after the electricity generation of 500 hours, the fuel cell was dissembled to observe the condition of the separator, in the same manner as in Example 1. The results are shown in Table 3.

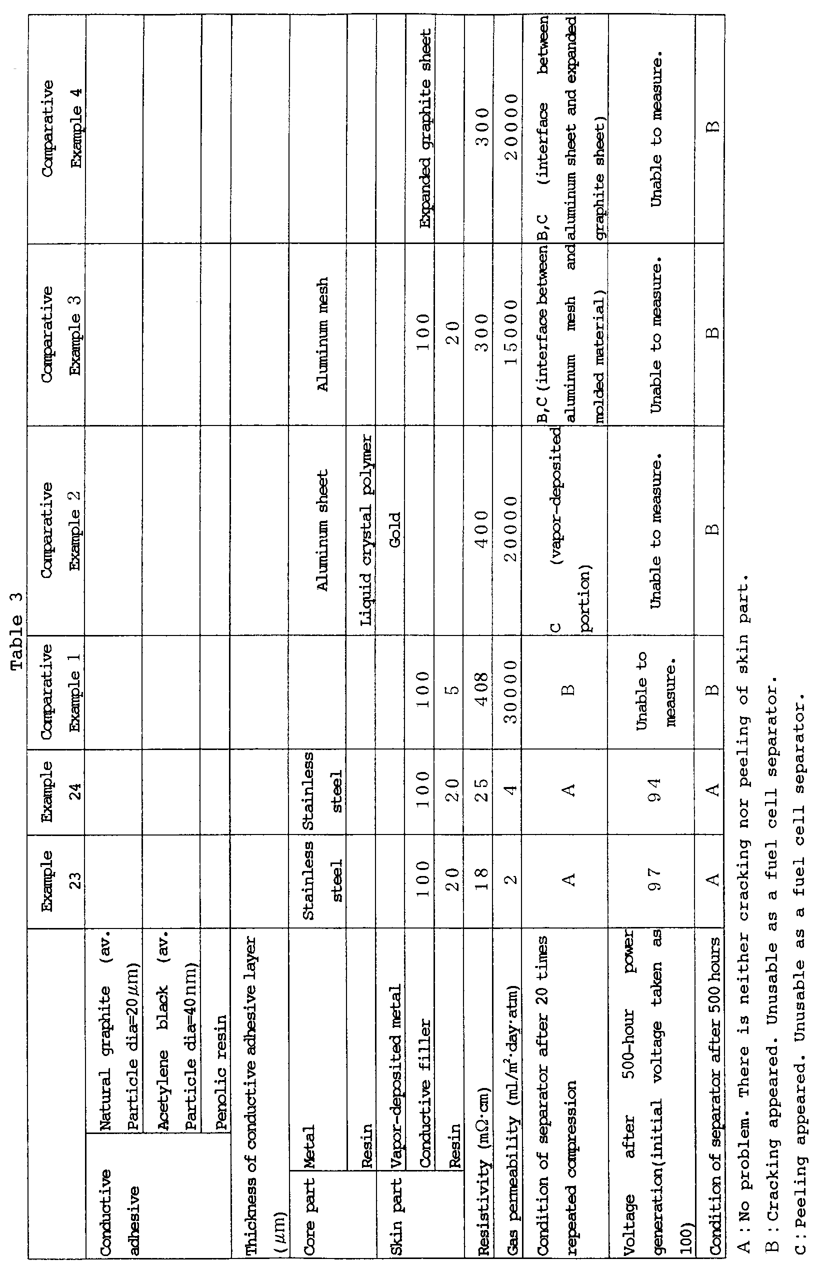

In the fuel cell separator of the present invention, since the conductive core part and the conductive skin part are adhered via the conductive adhesive layer, peeling hardly occurs between the conductive core part and the conductive skin part, and there occurs no reduction in strength or gas non-permeability even when the separator is made in a thin sheet.

Since the conductive core part and the conductive skin part are tightly adhered via the conductive adhesive layer, the present separator shows substantially no increase in resistance caused by increase in contact resistance.

## Claims

1. A separator for fuel cell, comprising
a conductive core part composed of a metal material or a metal composite material,
a conductive adhesive layer covering the conductive core part, and
a conductive skin part formed on the conductive adhesive layer,
wherein the conductive core part and the conductive skin part are bonded via the conductive adhesive layer.

2. A separator for fuel cell according to claim 1, wherein the conductive adhesive layer is composed of a carbon-containing conductive adhesive comprising a carbon powder acting as a conductive filler and a resin acting as a binder.

3. A separator for fuel cell according to Claim 1, wherein the conductive skin part is composed of a carbon-containing composite material comprising a carbon powder acting as a conductive filler and a resin acting as a binder.

4. A solid polymer type fuel cell using a separator for fuel cell set forth in any of Claims 1 to 3.
